# EUROPEAN PATENT SPECIFICATION

(11) **EP 2 586 661 B1**
(45) Date of publication and mention of the grant of the patent: **25.03.2015**
(21) Application number: 12189590.8
(22) Date of filing: 23.10.2012
(51) Int. Cl.: B60R 9/04

(54) **Load-bearing bar for a roof of a motor vehicle**
Schiene für Dachträger motorgetriebener Fahrzeuge
Barre de galerie de toit pour véhicules à moteur

(30) Priority: 25.10.2011 IT MO20110269
(43) Date of publication of application: 01.05.2013
(73) Proprietor: F.LLI MENABO' S.R.L., 42025 Cavriago (Reggio Emilia) (IT)
(72) Inventor: Menabo', Domenico, 42029 San Maurizio (Reggio Emilia) (IT); Salsi, Andrea, Bagnolo in Piano (Reggio Emilia) (IT)
(74) Representative: Crugnola, Pietro

(56) References cited:
- EP-A1- 1 447 279
- WO-A1-98/10959
- WO-A1-2010/148011
- DE-A1- 10 229 961
- US-A- 5 769 292

## Description

The invention relates to a load-bearing bar for a roof of a motor vehicle, in particular a load-bearing bar that is suitable for being mounted onto a motor vehicle having a roof that is provided with longitudinal guides.

In the field of motor vehicle accessories, a supporting bar that is mountable onto the roof of a motor vehicle is named "load-bearing bar", or "roof bar". Load-bearing bars are widely used because they enable the free surface to be exploited that is available on the roof of a motor vehicle (car or van), so as to increase the load capacity thereof. Pairs of load-bearing bars are positioned orthogonally to a longitudinal axis of the motor vehicle and are fixed to the roof of the latter. The pairs of load-bearing bars, once they have been fixed, can support and keep fixed to the roof loads of various types, for example further accessories such as roof trunks or roof bicycle carriers.

Both load-bearing bars to be used in combination with motor vehicles the roofs of which are provided with pairs of longitudinal guides, i.e. guides arranged parallel to the longitudinal axis of the motor vehicle, and load-bearing bars to be used in combination with motor vehicles devoid of the aforesaid pairs of guides are known. The load-bearing bar of the first type comprises a supporting element - usually a profiled element made of metal or plastics - which extends longitudinally and the opposite ends of which are fixed, through suitable anchoring devices, to the underlying pairs of guides. The supporting element comprises an upper face, which is usually grooved and owing to which a roof trunk, or a roof bicycle carrier, can be anchored to the bar. A drawback of the load-bearing bar disclosed above is that a user, after assembling the supporting element with the respective anchoring devices (usually two in number) and after appropriately spacing the latter on the basis of the distance between the longitudinal guides (distance that in turn depends on the transverse dimension, or width, of the roof of the motor vehicle), still has to perform various operations to anchor each bar solidly to the roof.

In particular, the user is forced to perform a first operation to fix the two anchoring devices to the longitudinal guides and a subsequent, separate operation to lock the supporting element on the underlying anchoring devices.

In fact, the user first has to fix the two anchoring devices to the longitudinal guides, by acting on suitable clamping elements (for example jaws) comprised in the anchoring devices.

Subsequently, the user has to lock the supporting element on the underlying anchoring devices, by using other suitable clamping elements (for example bolts or locking levers). Therefore, only after performing the sequence of operations disclosed above and after driving a plurality of clamping elements comprised in the known load-bearing bars, the user can load and fix on the latter, and thus on the roof of the motor vehicle, a load, such as, for example, a roof trunk. Similarly, to dismantle each load-bearing bar from the roof of the motor vehicle, the user first has to release the supporting element from the underlying anchoring devices, by acting on the corresponding clamping elements. Subsequently, the user has to act on the clamping elements of the anchoring devices in order to release the latter from the longitudinal guides.

It is thus clear that performing the aforesaid mounting and dismantling sequences entails a significant expenditure of time and makes the use of those known load-bearing bars substantially inconvenient.

DE 102 29 961 A1 shows the closest prior art in accordance with the preamble of claim 1 of the present invention.

An object of the invention is to improve known load-bearing bars, in particular the load-bearing bars that are mountable on motor vehicles the roof of which is provided with longitudinal guides.

Another object is to make available a load-bearing bar that is mountable on motor vehicles having roofs provided with longitudinal guides, which can be mounted stably, and dismantled as well, in ease and rapid manner, i.e. by performing a substantially reduced number of operations. According to the invention, a load-bearing bar is provided for a roof of a motor vehicle, as defined in claim 1.

The invention can be better understood and implemented with reference to the attached drawings that illustrate an embodiment thereof by way of non limiting example, in which:
Figure 1 is a partially assembled prospective view of a load-bearing bar according to the invention, comprising a supporting element and a pair of anchoring elements;
Figure 2 is a perspective, fragmentary and incomplete view showing the load-bearing bar of Figure 1 mounted on the roof of a motor vehicle;
Figure 3 is a perspective view showing an assembled anchoring element;
Figure 4 is an exploded perspective view of the anchoring element in Figure 3;
Figure 5 is a side, partially sectioned, view of the anchoring element in Figure 3;
Figure 6 is a longitudinal section of the anchoring element in Figure 3;
Figure 7 is an enlarged, fragmentary and incomplete side view, showing a constructional detail of the anchoring element in Figure 3;
Figure 8 is a perspective view showing alternative embodiments of a movable arm and of a jaw member comprised in the anchoring element;
Figure 9 is a side, partially sectioned, view, of an anchoring element comprising the alternative embodiments illustrated in Figure 8;
Figure 10 is a longitudinal section of the anchoring element in Figure 9;
Figure 11 is an enlarged, fragmentary and incomplete side view, showing a constructional detail of the anchoring element in Figure 9;
Figure 12 is a perspective, fragmentary and incomplete sectional view, illustrating the operation of adjustable connecting means comprised in the load-bearing bar according to the invention;
Figure 13 is a fragmentary and incomplete schematic longitudinal section, illustrating an operating detail of the adjustable connecting means in Figure 12.

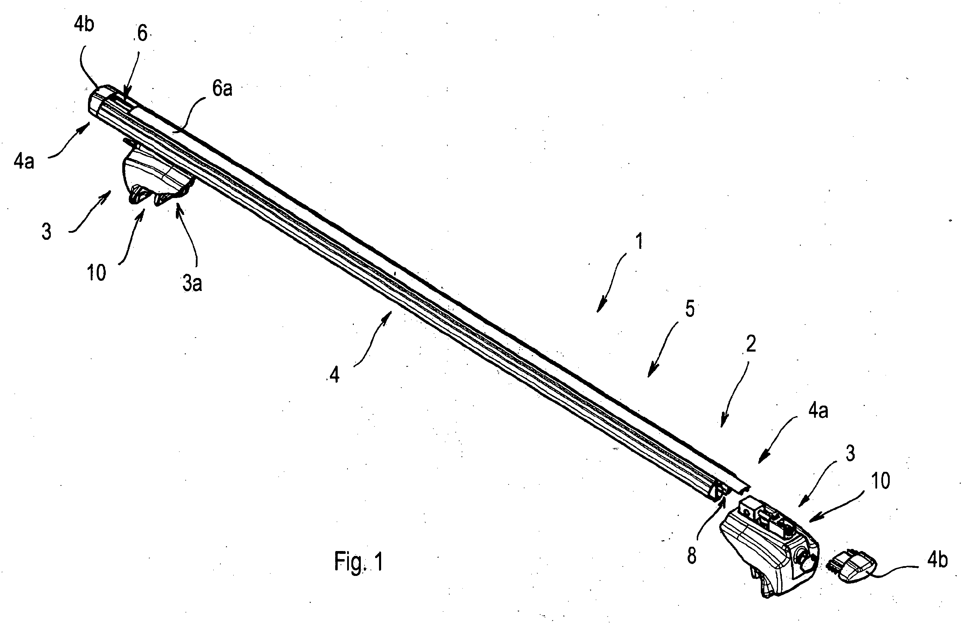

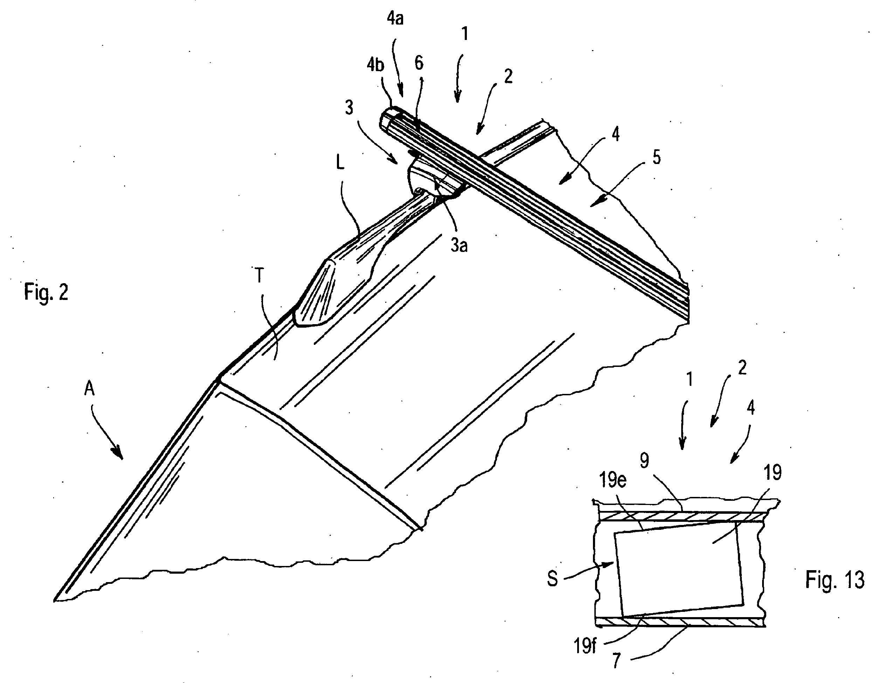

Figures 1, 2, 12 and 13 show a load-bearing bar 1 for a roof of a motor vehicle, comprising a supporting element 2 and a pair of underlying anchoring elements 3 (in Figure 13 only the supporting element 2 is shown schematically). Through the anchoring elements 3, the load-bearing bar 1 can be anchored stably to longitudinal guide means L, comprising a pair of longitudinal guides L (only one of which is shown in Figure 2) fixed to the outside of a roof T of a motor vehicle A.

The supporting element 2 comprises a body 4, that is hollow, substantially rectilinear, formed in the shape of a bar or profiled element and made of plastics, metal or another suitable stiff material. The body 4 comprises an anchoring face 5, a mounting face 7 and two opposite ends 4a. When the load-bearing bar 1 is assembled, each end 4a of the body 4 can be closed by a respective plug 4b, that can be fitted. The anchoring face 5 has an approximately rectangular shape and extends parallel to a longitudinal axis (that is not shown) of the supporting element 2. In use, the anchoring face 5 faces upwards - i.e. in a direction opposite the roof T - and is arranged for receiving a load (that is not shown), such as, for example a roof trunk or a roof bicycle carrier. In an approximately median portion of the anchoring face 5 an anchoring groove 6 opens that extends substantially over the entire length of the body 4 and is arranged for receiving mechanical fixing means of known type (that is not shown), for example screws or bolts, through which the above-mentioned load can be fixed stably to the anchoring face 5. The anchoring groove 6 - when not used for fixing the load - can be closed and protected through a covering element 6a that is made in the shape of a profiled section and is slidably insertible into the anchoring groove 6.

The mounting face 7 has an approximately rectangular shape and extends parallel to the longitudinal axis of the supporting element 2. In use, the mounting face 7 faces downwards, i.e. towards the roof T. In an approximately median portion of the mounting face 7 a mounting groove 8 opens that extends substantially over the entire length of the body 4 and is arranged for reciprocally assembling the supporting element 2 and the anchoring elements 3.

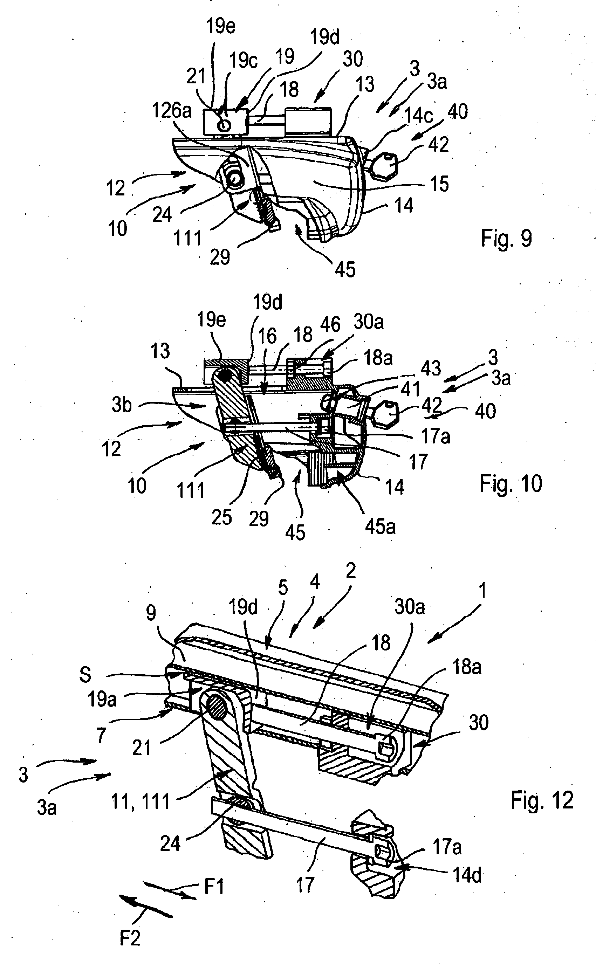

Inside the body 4, the anchoring groove 6 and the mounting groove 8 are reciprocally separated by an intermediate wall 9 (Figure 12), which is lamina-shaped, is substantially rectangular and is parallel to both the mounting face 7 and to the anchoring face 5.

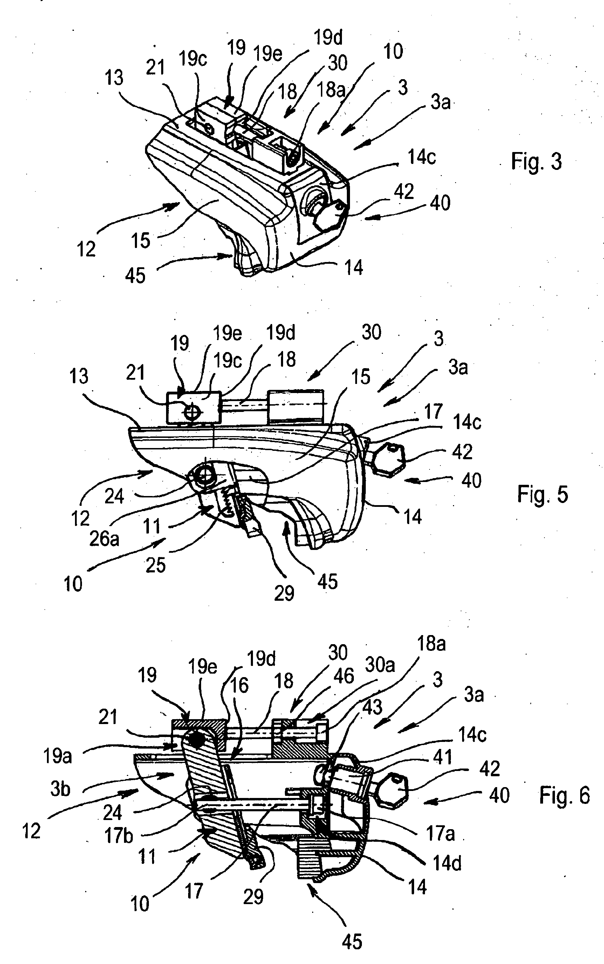

Figures 3, 4, 5, 6, 7, 9, 10, 12 and 13 show in detail the structure of the anchoring elements 3, each of which comprises a body 3a and houses, in part, adjustable connecting means 10.

The body 3a is hollow and is made of plastics (for example, polyamide), metal or other suitable stiff material. The body 3a is approximately wedge-shaped and comprises a mounting face 13, an operating face 14 and a pair of side faces 15. The operating face 14 is arranged in a substantially transverse manner as to the mounting face 13, the side faces 15, which are reciprocally opposite, are arranged in a substantially transverse manner as to the mounting face 13 and to the operating face 14. When the load-bearing bar 1 is assembled and fixed to the longitudinal guides L of the roof T, the mounting face 13 is arranged in a substantially horizontal manner and faces upwards, i.e. in a direction opposite the roof T, the operating face 14 faces the corresponding end 4a of the body 4 and is arranged in a substantially transverse and approximately vertical manner as to the roof T, the side faces 15 are both arranged in a substantially transverse and approximately vertical manner as to the roof T.

The mounting face 13, the operating face 14 and the side faces 15 overall define a cavity 3b that communicates with the exterior through an opening 12 and a groove 16. The opening 12 extends obliquely between the mounting face 13 and the operating face 14, whilst the groove 16 is obtained in an approximately median portion of the mounting face 13 and extends in a substantially parallel manner to a longitudinal axis (that is not shown) of the body 3a. The opening 12 is partially closed by a jaw portion 45, which is approximately C-shaped and fitted into a corresponding mounting portion 45a, which is made in the body 3a (Figure 10) and is opposite the operating face 14. The jaw portion 45 can be made of a thermoplastic elastomeric material comprising for example SEBS (styrene-ethylene-butylene-styrene).

When the load-bearing bar 1 is assembled and fixed to the longitudinal guides L of the roof T, the opening 12 faces downwards, i.e. toward the roof T, whilst the groove 16 faces upwards, i.e. in a direction opposite the roof T.

In the operating face 14 a seat portion 14a is made, on a bottom wall of which a through hole 14b is made. Through the through hole 14b, the seat portion 14a communicates with a chamber 14d (Figure 6; Figure 12), which is obtained in the thickness of the operating face 14. The chamber 14d in turn communicates with the cavity 3b of the body 3a through a threaded through hole (that is not shown). The seat portion 14a can be closed by a door portion 14c, in which a through hole 14e is obtained that is suitable for receiving a closing device 40. The closing device 40 comprises a lock 41, provided with a hooking element 43 that is drivable by a key 42. When the lock 41 is inserted into the through hole 14e the hooking element 43 is received into a corresponding seat 44, which is obtained in the bottom wall of the seat portion 14a (near the through hole 14b). After closing the seat portion 14a with the door portion 14c, the key 42 can be rotated in the lock 41 so as to enable the hooking element 43 to engage the seat 44. In this manner, the door portion 14c is locked and the seat 14a is kept closed.

In an embodiment that is not shown, the door portion 14c comprises a closing device that is different from the lock 41.

In another embodiment that is not shown, the door portion 14c does not comprise any closing device.

In a further embodiment that is not shown, the operating face 14 is devoid of the door portion 14c.

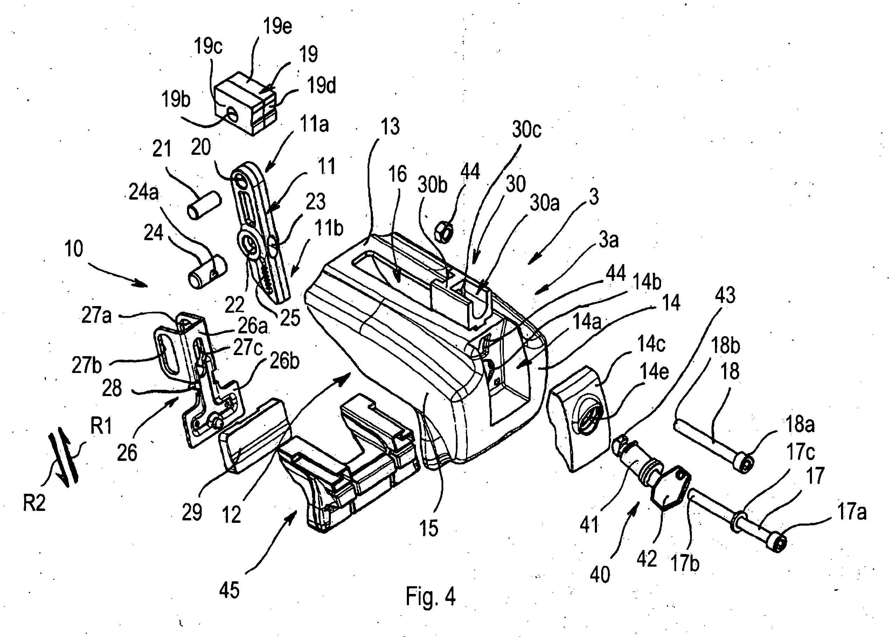

In the mounting face 13, between the groove 16 and the operating face 14 a mounting member 30 is interposed, which is approximately shaped as a hollow parallelpipedon (Figure 4). Through the mounting member 30 it is possible to mount the anchoring element 3 on the mounting face 7 of the supporting element 2, as the mounting member 30 is shaped in such a manner as to be slidably insertible into the mounting groove 8 of the mounting face 7. The mounting member 30, once it has been inserted into the mounting groove 8, rests on adjacent internal faces of the body 4 of the supporting element 2 (Figure 12) and thus keeps the body 3a of the anchoring element 3 connected to the supporting element 2. In the mounting member 30 a driving seat 30a is obtained that is concave and has a U-shaped cross section. Near one end of the mounting member 30 opposite the operating face 14, the driving seat 30a is closed by an abutting wall 30b, in which a threaded through hole 30c is obtained. When the load-bearing bar 1 is assembled and fixed to the longitudinal guides L of the roof T, the concavity of the driving seat 30a faces upwards, i.e. in a direction opposite the roof T. The adjustable connecting means 10 is partially housed in the cavity 3b of the body 3a and comprises a movable arm 11, a jaw member 26, an abutting element 19 and adjusting screw means 17, 18. As it will be explained in greater detail below, the adjustable connecting means 10 both enables the anchoring element 3 to be locked contemporaneously on the supporting element 2 and on the longitudinal guides L, and the anchoring element 3 to be released contemporaneously from the supporting element 2 and from the longitudinal guides L. As used from here onwards (both in the description of the invention and in the claims) in reference to the operation of the adjustable connecting means 10 (and of the adjusting screw means 17, 18), the term "contemporaneously" should be understood in the sense that the adjustable connecting means 10 is able to lock the anchoring element 3 both on the supporting element 2 and on the longitudinal guides L, or is able to release the anchoring element 3 both from the supporting element 2 and from the longitudinal guides L.

The movable arm 11, which is elongated, flattened and shaped approximately as a quadrilateral, comprises a first end 11a and a second end 11b, which are reciprocally opposite. In the first end 11a a through hole 20 is obtained that is arranged for receiving a pivot 21. In a side portion of the second end 11b a toothed guide 25 is comprised. The movable arm 11 can be made, for example, of zinc-aluminium-magnesium alloy (so-called "zama"). In an approximately intermediate portion of the movable arm 11 a through hole 22 and a channel 23 are obtained that are so arranged as to reciprocally intersect. The channel 23 extends in the thickness of the movable arm 11 in a substantially parallel manner to the longitudinal axis of the body 3a and is therefore arranged transversely to the axes (that are not shown) of the through holes 20 and 22. The through hole 22 is arranged for receiving a pivot 24, in which a threaded through hole 24a is obtained, which is arranged transversely as to a longitudinal axis (that is not shown) of the pivot 24. When the pivot 24 is inserted into the through hole 22, by rotating appropriately the pivot 24 it is possible to align the threaded through hole 24a with the channel 23. In the assembled anchoring element 3 the first end 11a is housed in a cavity 19a of the abutting element 19.

The abutting element 19, which is substantially parallelepipedon-shaped (Figure 4; Figure 12) and is devoid of two faces, comprises: a pair of reciprocally opposite side faces, only one of which is shown in the Figures and is indicated by the reference number 19c; an abutting face 19d, which is arranged transversely to the two side faces; a locking face 19e, arranged transversely to the two side faces and to the abutting face 19d; a locking edge 19f (Figure 13), which is defined by the two side faces and by the abutting face 19d. The cavity 19a is overall defined by the side faces, by the abutting face 19d and by the locking face 19e. In the assembled anchoring element 3, the abutting face 19d faces the mounting member 30. When the load-bearing bar 1 is assembled and fixed to the longitudinal guides L of the roof T, the locking face 19e faces upwards, i.e. in a direction opposite the roof T. In the pair of side faces a corresponding pair of reciprocally aligned through holes is obtained, only one of which is shown in the Figures and is indicated by the reference number 19b. The abutting element 19 can be made, for example, of zinc-aluminium-magnesium alloy (so-called "zama").

The abutting element 19 is pivoted on the first end 11a of the movable arm 11 by the pivot 21, which is inserted into the through holes of the abutting element 19 and into the through hole 20 of the first end 11a after the latter has been housed in the cavity 19a. As shown in Figure 12, in the assembled load-bearing bar 1 the abutting element 19 is contained inside the body 4 of the supporting element 2.

In one embodiment that is not shown, a single through hole is obtained in a single face of the abutting element 19. In this embodiment, the pivot 21 is inserted into the aforesaid single through hole and into the through hole 20 of the first end 11a and is received inside a recess that is obtained in the thickness of the side face (of the abutting element 19) opposite the single through hole.

The movable arm 11 is arranged for supporting and driving a jaw member 26, which is mounted on the movable arm 11 by the pivot 24. The jaw member 26 comprises a fixing portion 26a and an abutting portion 26b, which are reciprocally opposite. The jaw member 26 can be made, for example, of steel. In the fixing portion 26a - having an approximately C-shaped cross section - there are obtained a pair of reciprocally parallel and opposite side slots 27a, 27b and an intermediate slot 27c that is arranged transversely to the aforesaid side slots. In the assembled anchoring element 3, the jaw member 26 and the movable arm 11 are reciprocally positioned in such a manner that the approximately intermediate portion of the movable arm 11, in which the through hole 22 and the channel 23 are obtained, is received inside a concavity defined by the fixing portion 26a. In this configuration, the side slots 27a, 27b and the through hole 22 are aligned reciprocally. Consequently, the pivot 24 can be inserted both into the side slots 27a, 27b and into the through hole 22, so as to keep the jaw member 26 and the movable arm 11 reciprocally connected.

The abutting portion 26b, which is quadrilateral- shaped, is aligned on the fixing portion 26a and is arranged in a substantially transverse manner as to the latter. An abutting plate 29, which is quadrilateral-shaped, is fixed to the abutting portion 26b by fitting and/or by screws (that are not shown). The abutting plate 29 can be made of a thermoplastic elastomeric material, comprising for example SEBS (styrene-ethylene-butylene-styrene).

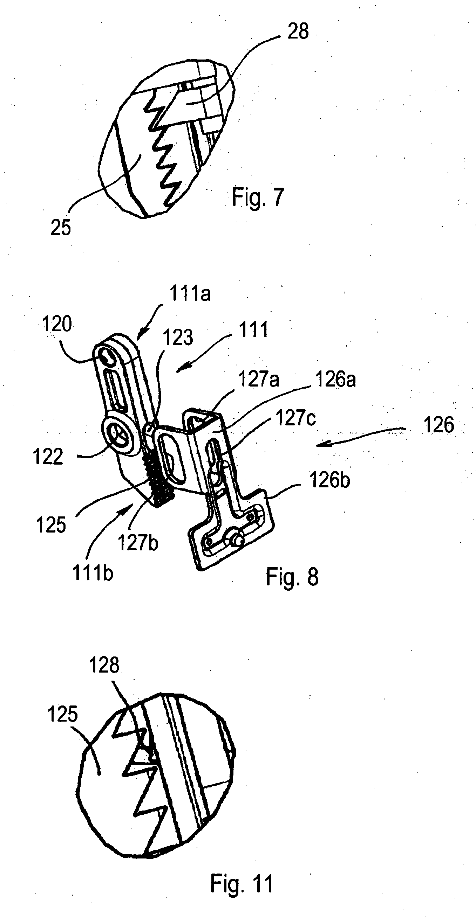

In a zone of the jaw member 26, approximately intermediate between the fixing portion 26a and the abutting portion 26b, a tooth element 28 is made. The tooth element 28 is positioned on the jaw member 26 in such a manner that, when the jaw member 26 is mounted on the movable arm 11, the tooth element 28 can engage a corresponding tooth of the toothed guide 25, as shown in detail in Figure 7.

In the assembled anchoring element 3, the opposite ends of the pivot 24 exit from the through hole 22 and are received in slidable manner in the side slots 27a, 27b. Consequently, the jaw member 26 can be moved in slidable manner on the movable arm 11 according to two reciprocally parallel and opposite directions that are indicated in Figure 4 by the arrows R1 and R2. The movement of the jaw member 26 in relation to the movable arm 11 is controlled through the interaction between the tooth element 28 and the teeth of the toothed guide 25.

As it will be explained in greater detail below, in each anchoring element 3 of the load-bearing bar 1, the jaw member 26 and the jaw portion 45 interact reciprocally so as to tighten the respective, underlying longitudinal guide L. The adjusting screw means 17, 18 comprises a driving screw 17 and a positioning screw 18.

In the assembled anchoring element 3, the driving screw 17 is provided with a washer 17c and is inserted inside the body 3a at the operating face 14 of the latter. The driving screw 17 is inserted into the through hole 14b of the seat portion 14a, so as to traverse, in sequence, the chamber 14d of the operating face 14 and the cavity 3b of the body 3a, until it reaches the jaw member 26 and the movable arm 11 (Figure 6; Figure 12). In this manner, a head 17a of the driving screw 17 - together with the washer 17c - is received in the chamber 14d, whilst an end 17b of the driving screw 17 - opposite the head 17a - traverses the intermediate slot 27c of the fixing portion 26a of the jaw member 26, enters the channel 23 of the movable arm 11 and can engage the threaded through hole 24a of the pivot 24 (Figure 6; Figure 12).

In the assembled anchoring element 3, the positioning screw 18 is mounted outside the body 3a and at the mounting face 13 of the latter. The positioning screw 18 - which is less long than the driving screw 17 - is inserted into the driving seat 30a and caused to pass (namely screwed) through the through hole 30c of the abutting wall 30b. In this manner, a head 18a of the positioning screw 18 is kept inside the driving seat 30a and an end 18b of the positioning screw 18 - opposite the head 18a - reaches, and can come into contact with, the abutting face 19d of the abutting element 19. The positioning screw 18 is kept in the driving seat 30a through a nut 46, which is positioned between the abutting wall 30b and a base portion of the driving seat 30a.

In order to assemble the load-bearing bar 1, a user can slidably insert each mounting member 30 of each anchoring element 3 into the mounting groove 8 of the supporting element 2, suitably space the two anchoring elements 3 - by sliding the two mounting members 30 into the mounting groove 8 - on the basis of the space between the longitudinal guides L and rest the two anchoring elements 3 on the underlying longitudinal guides L. Each anchoring element 3 can be rested on the corresponding longitudinal guide L in such a manner that the latter is interposed between the jaw member 26 and the jaw portion 45 of the anchoring element 3. When the load-bearing bar 1 is so assembled, the abutting element 19 is contained inside the body 4 of the supporting element 2 (Figure 12).

The user can easily adapt the anchoring element 3 to the shape of the longitudinal guide L, and/or to the distance comprised between the latter and the roof T, by varying the reciprocal position of the movable arm 11 and of the jaw portion 26, i.e. by moving (in slidable manner) the jaw member 26 on the movable arm 11 according to one of the two directions R1 and R2 (Figure 4). This movement is effectively controlled through the interaction between the tooth element 28 and the teeth of the toothed guide 25.

At this point - unlike what happens using known load-bearing bars - the user can lock each anchoring element 3 contemporaneously on the supporting element 2 and on the longitudinal guide L by acting only on the adjustable connecting means 10 and, more exactly, on the driving screw 17 and on the positioning screw 18.

Through a suitable tool of known type (that is not shown)-for example a spanner - it is possible to rotate the positioning screw 18 (clockwise or anticlockwise, according to the thread direction of the screw) around a longitudinal axis (that is not shown) thereof, so as to move the end 18b according to a direction indicated by the arrow F2 (Figure 12). In this manner, the end 18b is moved progressively towards the abutting element 19 until it knocks the abutting face 19d. As the longitudinal axis of the positioning screw 18 is not aligned with, but is parallel to a longitudinal axis (that is not shown) of the abutting element 19, the end 18b knocks a peripheral zone of the abutting face 19d. Consequently, the abutting element 19 starts to rotate - around the pivot 21 - inside the body 4, in a free space S - shown in Figure 12 and in Figure 13 - comprised between the intermediate wall 9 and the mounting face 7 of the supporting element 2. In Figure 13 the abutting element 19 is represented schematically by a rectangle, whereas the positioning screw 18 is not shown. The abutting element 19 continues to rotate until a portion of the locking face 19e knocks, and stops, against the intermediate wall 9 (Figure 13) and a portion of the locking edge 19f knocks, and stops, against an adjacent internal portion of the mounting face 7 (Figure 13).

After thus positioning the abutting element 19 through the positioning screw 18, the user can act on the driving screw 17, the end 17b of which (in the assembled anchoring element 3) is received in the channel 23 of the movable arm 11 and engages the threaded through hole 24a of the pivot 24. Through the aforementioned tool, it is possible to rotate the driving screw 17 (clockwise or anticlockwise, according to the thread direction of the screw) around a longitudinal axis thereof (that is not shown), so as to move the pivot 24 according to a direction indicated by the arrow F1 (Figure 12). Consequently, the movable arm 11 and the corresponding jaw member 26 are moved toward the jaw portion 45 of the anchoring element 3. As the abutting element 19 - which has been positioned and locked through the positioning screw 18 - is pivoted through the pivot 21 on the first end 11a of the movable arm 11, the movable arm 11 approaches the jaw portion 45 by rotating. The jaw member 26 and the jaw portion 45 are thus reciprocally brought near, until the abutting plate 29 of the jaw member 26 and the jaw portion 45 are clamped against the interposed longitudinal guide L. In this manner, each anchoring element 3 is effectively locked on the corresponding longitudinal guide L.

As the jaw member 26 is locked against the longitudinal guide L, by continuing to rotate the driving screw 17 a mechanical stress is produced that acts on the movable arm 11 and is transmitted, through the first end 11a of the latter, to the abutting element 19. Through the effect of the aforesaid mechanical stress, in the abutting element 19 the locking face 19e is pushed against the intermediate wall 9 and the locking edge 19f is pushed against the adjacent internal portion of the mounting face 7. The abutting element 19 is then stably locked against adjacent internal portions of the body 4, so as to prevent the mounting member 30 from sliding inside the body 4. Consequently, the anchoring element 3 cannot be released from the supporting element 2.

In this manner, each anchoring element 3 is effectively locked on the supporting element 2 and the load-bearing bar 1 is stably mounted on the roof T of the motor vehicle A, as shown in Figure 2.

In order to dismantle the load-bearing bar 1 from the roof T, it is sufficient to rotate appropriately the driving screw 17 around the longitudinal axis of the latter, until the abutting element 19 is released. In this manner, the anchoring element 3 can be released from the supporting element 2. By continuing to rotate the driving screw 17, it is possible to loosen (i.e. reciprocally move away according to the direction F2) the jaw member 26 and the jaw portion 45. In this manner, the anchoring element 3 can also be released from the longitudinal guide L.

From what has been disclosed above, it is clear that the user of the load-bearing bar 1 can lock each anchoring element 3 contemporaneously on the supporting element 2 and on the longitudinal guide L by acting only on the adjustable connecting means 10 and, more exactly, on the driving screw 17 and on the positioning screw 18 comprised in the adjustable connecting means 10. Analogously, the user can release each anchoring element 3 contemporaneously from the supporting element 2 and from the longitudinal guide L by acting only on the adjustable connecting means 10. Therefore, owing to the invention a load-bearing bar is made available that is mountable on motor vehicles having roofs with longitudinal guides, which load-bearing bar can be mounted stably, and dismantled as well, in ease and rapid manner, i.e. by performing a substantially reduced number of operations.

Figures 8 and 11 show an alternative embodiment of the movable arm 11 - indicated by the number 111 - and a corresponding alternative embodiment of the jaw member 26 - indicated by the number 126.

Figures 9 and 10 show an assembled anchoring element 3, comprising the movable arm 111 and the jaw member 126. The operating principle of the anchoring element 3 of Figures 9 and 10 is the same as that of the anchoring element 3 disclosed previously with reference to Figures 3-7, 12 and 13 and therefore it will not be disclosed further below.

The movable arm 111 is made in a similar manner to the movable arm 11 and thus comprises a first end 111a and a second end 111b, which are reciprocally opposite. In the first end 111a a through hole 120 is obtained - which is arranged for receiving the pivot 21 - whilst in an approximately median portion of the movable arm 111 there a through hole 122 - which is arranged for receiving the pivot 24 - and a channel 123 - which is arranged for receiving both the pivot 24 and the driving screw 17 are obtained. The through hole 122 and the channel 123 intersect reciprocally and, when the pivot 24 is inserted into the through hole 122, by suitably rotating the pivot 24 it is possible to align the threaded through hole 24a with the channel 123. The first end 111a is housed in the cavity 19a of the abutting element 19 and the latter is pivoted on the first end 111a by the pivot 21.

Unlike the movable arm 11, the movable arm 111 does not comprise the toothed guide 25, but a toothed face 125 that is larger than the toothed guide 25 and is obtained in the second end 111b. The movable arm 111 is arranged for supporting and driving a jaw member 126, which is mounted on the movable arm 111 through the pivot 24.

The jaw member 126 is made in a similar manner to the jaw member 26 and thus comprises a fixing portion 126a and an abutting portion 126b. The fixing portion 126a has an approximately C-shaped cross section and has a pair of side slots 127a, 127b and an intermediate slot 127c. The abutting portion 126b, which is aligned to the fixing portion 126a and arranged in a substantially transverse manner to the latter, is arranged for receiving the abutting plate 29. In a zone of the jaw member 126, which is approximately intermediate between the fixing portion 126a and the abutting portion 126b, a tooth element 128 is made. The tooth element 128 is smaller than the tooth element 28 (of the jaw member 26), but functionally similar to the latter. Therefore, also the tooth element 128 is positioned on the jaw member 126 in such a manner that, when the jaw member 126 is mounted on the movable arm 111, the tooth element 128 can engage a corresponding tooth of the toothed face 125, as shown in detail in Figure 11. In the anchoring element 3 shown in Figures 9 and 10, the jaw member 126 and the movable arm 111 are reciprocally positioned and connected in a similar manner to what has been previously disclosed with reference to the movable arm 11 and to the jaw member 26. Therefore, also the jaw member 126 can be moved (in slidable manner) on the movable arm 111 according to the two directions R1, R2 and also the movement of the jaw member 126 in relation to the movable arm 111 is controlled through the interaction between the tooth element 128 and the teeth of the toothed face 125.

Further versions of and/or additions to what has been disclosed above and/or to what is shown in the attached drawings are also possible.

## Claims

1. Load-bearing bar (1) for a roof (T) of a motor vehicle (A), comprising a supporting element (2) that is suitable for supporting a load and at least one anchoring element (3) arranged for being anchored to longitudinal guide means (L) comprised in said roof (T), said supporting element (2) and said at least one anchoring element (3) being reciprocally connected through adjustable connecting means (10), said adjustable connecting means (10) comprising adjusting screw means (17, 18) arranged for alternatively locking said at least one anchoring element (3) contemporaneously on said supporting element (2) and on said longitudinal guide means (L), or releasing said at least one anchoring element (3) contemporaneously from said supporting element (2) and from said longitudinal guide means (L), **characterised in that** said adjustable connecting means (10) comprises a driving screw (17), a positioning screw (18) and an abutting element (19) that is contained in said supporting element (2), wherein said driving screw (17) is housed in said at least one anchoring element (3) and arranged for driving a jaw member (26; 126) comprised in said adjustable connecting means (10), said abutting element (19) is arranged for alternatively locking said at least one anchoring element (3) on said supporting element (2), or releasing said at least one anchoring element (3) from said supporting element (2), and said positioning screw (18) is arranged for moving said abutting element (19) in such a manner as to bring opposite portions (19e, 19f) of said abutting element (19) into contact with adjacent internal portions of said supporting element (2).

2. Load-bearing bar (1) according to claim 1, wherein said driving screw (17) is alternatively able to move said jaw member (26, 126) towards a jaw portion (45) that is comprised in said at least one anchoring element (3), so as to lock said at least one anchoring element (3) on said longitudinal guide means (L), or to move said jaw member (26; 126) away from said jaw portion (45), so as to release said at least one anchoring element (3) from said longitudinal guide means (L).

3. Load-bearing bar (1) according to claim 1, or 2, wherein said adjustable connecting means (10) comprises a movable arm (11; 111) that is arranged for supporting said jaw member (26; 126), said movable arm (11; 111) being drivable by said driving screw (17).

4. Load-bearing bar (1) according to claim 3, wherein said abutting element (19) is pivoted on an end (11a; 111a) of said movable arm (11; 111).

5. Load-bearing bar (1) according to claim 4, wherein said driving screw (17) is arranged for producing a mechanical stress acting on said movable arm (11; 111) and on said abutting element (19), so as to push said opposite portions (19e, 19f) against said adjacent internal portions of said supporting element (2) and lock said abutting element (19) inside said supporting element (2).

6. Load-bearing bar (1) according to any one of claims 3 to 5, wherein said jaw member (26; 126) can be moved in a slidable manner in relation to said movable arm (11; 111), to enable said at least one anchoring element (3) to be adapted to the shape of said longitudinal guide means (L) and/or to a distance comprised between said longitudinal guide means (L) and said roof (T).

7. Load-bearing bar (1) according to any preceding claim, wherein said supporting element (2) is connected to a pair of anchoring elements (3) through said adjustable connecting means (10).

## Patentansprüche

1. Lasttragende Stange (1) für ein Dach (T) eines Motorfahrzeugs (A), aufweisend ein Abstützelement (2), welches geeignet ist, eine Last abzustützen, und wenigstens ein Verankerungselement (3), welches eingerichtet ist, in einem in diesem Dach (T) enthaltenen Längsführungsmittel (L) verankert zu werden, wobei dieses Abstützelement (2) und dieses wenigstens eine Verankerungselement (3) durch verstellbare Verbindungsmittel (10) wechselseitig verbunden sind, wobei diese verstellbaren Verbindungsmittel (10) Stellschraubenmittel (17,18) aufweisen, welche eingerichtet sind, alternativ dieses wenigstens eine Verankerungselement (3) gleichzeitig an diesem Abstützelement und an diesem Längsführungsmittel (L) festzulegen, oder dieses wenigstens eine Verankerungselement (3) gleichzeitig von diesem Abstützelement (2) und von diesem Längsführungsmittel (L) freizugeben,
**dadurch gekennzeichnet, dass**
dieses verstellbare Verbindungsmittel (10) eine Bewegungsschraube (17), eine Positionierschraube (18) und ein in diesem Abstützelement (2) enthaltenes Anstoßelement (19) aufweist, wobei diese Bewegungsschraube (17) in diesem wenigstens einen Verankerungselement (3) aufgenommen ist und eingerichtet ist, eine Klemmbackeneinrichtung (26; 126) zu bewegen, welche in diesem verstellbaren Verbindungsmittel (10) enthalten ist, wobei dieses Anstoßelement (19) eingerichtet ist, alternativ dieses wenigstens eine Verankerungselement (3) an diesem Abstützelement (2) festzulegen, oder dieses wenigstens eine Verankerungselement (3) von diesem Abstützelement (2) freizugeben, und wobei diese Positionierschraube (18) eingerichtet ist, dieses Anstoßelement (19) derart zu bewegen, dass gegenüberliegende Teilbereiche (19e, 19)f dieses Anstoßelements (19) in Kontakt mit anschließenden, internen Teilbereichen dieses Abstützelements (2) gebracht werden.

2. Lasttragende Stange (1) gemäß Anspruch 1, wobei diese Bewegungsschraube (17) alternativ diese Klemmbackeneinrichtung (26, 126) auf einen Klemmbacken-Teilbereich (45) zubewegen kann, welcher in diesem wenigstens einen Verankerungselement (3) enthalten ist, um dieses wenigstens eine Verankerungselement (3) auf diesem Längsführungsmittel (L) festzulegen, oder diese Klemmbackeneinrichtung (26; 126) von diesem Klemmbacken-Teilbereich (45) weg bewegen kann, um dieses wenigstens eine Verankerungselement (3) von diesem Längsführungsmittel (L) freizugeben.

3. Lasttragende Stange (1) gemäß Anspruch 1 oder 2, wobei dieses verstellbare Verbindungsmittel (10) einen beweglichen Arm (11; 111) aufweist, welcher zum Unterstützen dieser Klemmbackeneinrichtung (26; 126) eingerichtet ist, wobei dieser bewegliche Arm (11; 111) durch diese Bewegungsschraube (17) bewegbar ist.

4. Lasttragende Stange (1) gemäß Anspruch 3, wobei dieses Anstoßelement (19) in einem Ende (11a; 111a) dieses beweglichen Arms (11; 111) drehbar gelagert ist.

5. Lasttragende Stange (1) gemäß Anspruch 4, wobei diese Bewegungsschraube (17) eingerichtet ist, eine mechanische Spannung zu produzieren, die auf diesen beweglichen Arm (11; 111) und auf dieses Anstoßelement (19) wirkt, um diese gegenüberliegenden Teilbereiche (19e, 19f) gegen diese anschließenden, internen Teilbereichen dieses Abstützelements (2) zu drücken und diese Anstoßelemente (19) innerhalb dieses Abstützelements (2) festzulegen.

6. Lasttragende Stange (1) gemäß einem der Ansprüche 3 bis 5, wobei diese Klemmbackeneinrichtung (26; 126) in einer verschiebbaren Art in Relation zu diesen beweglichen Arm (11; 111) bewegt werden kann, um dieses wenigstens eine Verankerungselement (3) in die Lage zu versetzen, an die Form dieses Längsführungsmittels (L) und/oder an den Abstand welcher zwischen diesem Längsführungsmittel (L) und diesem Dach (T) enthalten ist, angepasst zu werden.

7. Lasttragende Stange (1) gemäß einem der vorherigen Ansprüche, wobei dieses Abstützelement (2) mit einem Paar von Verankerungselementen (3) mittels dieser verstellbaren Verbindungsmittel (10) verbunden ist.

## Revendications

1. Barre porteuse de charge (1) pour un toit (T) d'un véhicule à moteur (A), comprenant un élément de support (2) qui est apte à supporter une charge et au moins un élément d'ancrage (3) agencé pour être ancré à des moyens de guidage longitudinal (L) compris dans ledit toit (T), ledit élément de support (2) et ledit au moins un élément d'ancrage (3) étant réciproquement reliés par des moyens de liaison réglables (10), lesdits moyens de liaison réglables (10) comprenant des moyens de vis de réglage (17, 18) agencés pour verrouiller alternativement ledit au moins un élément d'ancrage (3) simultanément sur ledit élément de support (2) et sur lesdits moyens de guidage longitudinal (L), ou libérer ledit au moins un élément d'ancrage (3) simultanément dudit élément de support (2) et desdits moyens de guidage longitudinal (L), **caractérisée en ce que** lesdits moyens de liaison réglables (10) comprennent une vis d'entraînement (17), une vis de positionnement (18) et un élément de butée (19) qui est contenu dans ledit élément de support (2), dans laquelle ladite vis d'entraînement (17) est logée dans ledit au moins un élément d'ancrage (3) et agencée pour entraîner un organe à mâchoire (26 ; 126) compris dans lesdits moyens de liaison réglables (10), ledit élément de butée (19) est agencé pour verrouiller alternativement ledit au moins un élément d'ancrage (3) sur ledit élément de support (2), ou libérer ledit au moins un élément d'ancrage (3) dudit élément de support (2), et ladite vis de positionnement (18) est agencée pour déplacer ledit élément de butée (19) de telle manière à mettre des parties opposées (19e, 19f) dudit élément de butée (19) en contact avec des parties internes adjacentes dudit élément de support (2).

2. Barre porteuse de charge (1) selon la revendication 1, dans laquelle ladite vis d'entraînement (17) est apte à alternativement déplacer ledit organe à mâchoire (26 ; 126) vers une partie de mâchoire (45) qui est comprise dans ledit au moins un élément d'ancrage (3), de manière à verrouiller ledit au moins un élément d'ancrage (3) sur lesdits moyens de guidage longitudinal (L), ou déplacer ledit organe à mâchoire (26 ; 126) à l'écart de ladite partie de mâchoire (45), de manière à libérer ledit au moins un élément d'ancrage (3) desdits moyens de guidage longitudinal (L).

3. Barre porteuse de charge (1) selon la revendication 1 ou 2, dans laquelle lesdits moyens de liaison réglables (10) comprennent un bras mobile (11 ; 111) qui est agencé pour supporter ledit organe à mâchoire (26 ; 126), ledit bras mobile (11 ; 111) étant apte à être entraîné par ladite vis d'entraînement (17).

4. Barre porteuse de charge (1) selon la revendication 3, dans laquelle ledit élément de butée (19) pivote sur une extrémité (11a; 111a) dudit bras mobile (11 ; 111).

5. Barre porteuse de charge (1) selon la revendication 4, dans laquelle ladite vis d'entraînement (17) est agencée pour produire une contrainte mécanique agissant sur ledit bras mobile (11 ; 111) et sur ledit élément de butée (19), de manière à pousser lesdites parties opposées (19e, 19f) contre lesdites parties internes adjacentes dudit élément de support (2) et verrouiller ledit élément de butée (19) à l'intérieur dudit élément de support (2).

6. Barre porteuse de charge (1) selon l'une quelconque des revendications 3 à 5, dans laquelle ledit organe à mâchoire (26 ; 126) peut être déplacé de manière à pouvoir coulisser par rapport audit bras mobile (11 ; 111), pour permettre audit au moins un élément d'ancrage (3) d'être adapté à la forme desdits moyens de guidage longitudinal (L) et/ou à une distance comprise entre lesdits moyens de guidage longitudinal (L) et ledit toit (T).

7. Barre porteuse de charge (1) selon l'une quelconque des revendications précédentes, dans laquelle ledit élément de support (2) est relié à une paire d'éléments d'ancrage (3) par lesdits moyens de liaison réglables (10).
